# EUROPÄISCHE PATENTSCHRIFT

(11) **EP 2 839 594 B1**
(45) Veröffentlichungstag und Bekanntmachung des Hinweises auf die Patenterteilung: **11.01.2017**
(21) Anmeldenummer: 13722973.8
(22) Anmeldetag: 17.04.2013
(51) Int. Cl.: H04B 11/00, B63C 9/20, B63C 11/26

(54) **SIGNALEINRICHTUNG FÜR TAUCHER**
SIGNALLING DEVICE FOR DIVERS
DISPOSITIF DE SIGNALISATION POUR PLONGEUR

(30) Priorität: 20.04.2012 AT 4872012
(43) Veröffentlichungstag der Anmeldung: 25.02.2015
(73) Patentinhaber: Baumgartinger, Rainer, 4852 Weyregg (AT)
(72) Erfinder: HASLINGER, Karl, A-4840 Vöcklabruck (AT); ROTHBUCHER, Bernhard, A-5020 Salzburg (AT); ROHER, Matthias, A-4020 Linz (AT)
(74) Vertreter: Müllner, Martin
(86) Internationale Anmeldenummer: PCT/AT2013/050091
(87) Internationale Veröffentlichungsnummer: WO 2013/155546

(56) Entgegenhaltungen:
- US-A- 4 779 554

## Beschreibung

Die Erfindung betrifft eine Signaleinrichtung für Taucher mit einer Pressluftmengen- bzw. Verbrauchsanzeige für Atemluft, einer Tauchtiefenanzeige, vorzugsweise einer Tauchzeitanzeige, sowie insbesondere einer Schaltung zur Auslösung eines Alarmes, z.B. eines Lichtsignals, bei Erreichen bzw. Überschreiten mindestens eines voreingestellten Grenzwertes.

Das Tauchen als Sport sowie auch professionelles Tauchen sind Aktivitäten, die einem erhöhten Risiko unterliegen. Deshalb sind umfangreiche Schulungen erforderlich. Neben der Handhabung der Ausrüstung auch in Stresssituationen sind Einflüsse aus der fremden Umgebung wie auch die eigene Kondition und der Gesundheitszustand zu beachten. Ursprünglich waren Taucheruhren zur Anzeige der auf die Pressluftmenge abgestimmten Tauchzeit sowie Tiefenmesser die einzigen Geräte, die den Taucher in die Tiefen begleiteten. Durch Handzeichen wurde die Kommunikation zwischen den Tauchern aufrechterhalten. Heute sind Tauchcomputer mit Alarmeinrichtungen und automatische Rettungssysteme weit verbreitet, die einen kontrollierten Aufstieg oder auch einen lebensrettenden Notaufstieg allenfalls zusammen mit Airbags oft auch selbsttätig bewirken.

Natürlich kommt eine Unterwasserkommunikation im Ultraschallbereich hinzu, wobei auch Empfangsbojen an der Wasseroberfläche eingesetzt werden, die Signale in terrestrische Kommunikations-frequenzen umsetzen und allenfalls GPS Koordinaten mit Hilferufen absetzen. Da viele Probleme durch Mundstücke, Verbindungsschläuche und Pressluftflaschen hervorgerufen werden, ist es durchaus üblich, eine kleine zusätzliche Pressluftflasche mit Schlauch und Mundstück bei einem Tauchgang mitzuführen, sodass ausreichend Luft zur Verfügung steht, bei Ausfall der primären Atemluftversorgung in dem erforderlichen Zeitraum abhängig von der Tiefe kontrolliert aufzusteigen.

Die US 4779554 A betrifft einen am Rücken zu tragenden Tornister, der ein starres Gehäuse bildet und eine Sauerstofflasche und weitere empfindliche Aggregate vor Beschädigungen während eines Tauchganges schützt. Insbesondere ist eine Auftriebsregelung enthalten, die für den Gewichtsausgleich bzw. Trim sorgt. Ferner verfügt dieser Tornister über Rettungseinrichtungen für den Notaufstieg sowie über eine Positionsmarkierung in Form einer Boje, die in einem Notfall an die Wasseroberfläche aufsteigt.

Aus der US 7612686 B ist ein Unterwassernotfallgerät bekannt, das modular aufgebaut ist und Signale abgibt, die den begleitenden Tauchern eine Notsituation anzeigen. Die Signale können auch etwa im Relaiswege weitergeleitet und anderen Geräten in einer Rettungskette übermittelt werden. Ferner ist ein Teil des Gerätes abkuppelbar. Es kann an die Wasseroberfläche aufsteigen und dort die Parameter zur Rettung eines unter Wasser befindlichen, etwa am Aufstieg gehinderten Tauchers anzeigen.

Die
GB 2449495 A --. betrifft ein Rettungsgerät, insbesondere für Taucher für den kontrollierten Notaufstieg. Über einen am Rücken getragenen aufblasbaren Auftriebskörper befindet sich ein Sicherheitsbügel, der bei Auslösung über den Kopf des Tauchers schwenkt. Dadurch ist einerseits der Kopf geschützt und andrerseits können Helfer den in eine Notsituation geratenen Taucher ergreifen und entsprechend Hilfe leisten. Mit dem Sicherheitsbügel ist auch eine Signalleuchte verbunden. Ein Seenotsignalgerät ist in der US 2007076527 A --.
   beschrieben, das ein wasserdichtes Gehäuse mit Batterie und Lichtquelle sowie Sender und Teleskopantenne mit Signalflagge umfasst. Die
DE 10012986 A --.
   geht von einem Handsender aus, der bei Entnahme aus einer Halterung am Tauchanzug sowohl optische als auch akustische Signale als Notsignale abgibt.

### Darstellung der Erfindung

Die Erfindung zielt darauf ab, eine Signaleinrichtung im Rahmen eines Tauchsicherheitssystems zu schaffen, die in Abhängigkeit von den Ist-Daten und den Solldaten eines Tauchcomputers optisch aktivierbar und bei anhaltendem Alarm eine Notsituation zusätzlich für die Umgebung deutlich sichtbar macht.

Dies wird mit einer Signaleinrichtung der eingangs beschriebenen Art dadurch erreicht, dass sich eine Lasche längs eines Pressluftflaschen-Schultergurtes, diesen zumindest teilweise überdeckend, vom Schulterbereich ausgehend in Richtung zum Gürtelbereich erstreckt, dass die Lasche im Schulterbereich schwenkbar angelenkt und am freien Ende mit einem lösbaren Verschluss ausgestattet ist, der die Lasche parallel zum Schultergurt unmittelbar an diesem oder an einem Lappen an dem Schultergurt festhält und der von Hand aus oder selbsttätig bei Anliegen eines Alarmes bei bzw. nach Überschreiten eines der voreingestellten Grenzwerte, zur Freigabe, Hochklappen bzw. Aufschwimmen der Lasche lösbar ist, wobei die Lasche eine Signalleuchte am freien Ende trägt, die bei geöffnetem Verschluss bzw. bei Anliegen eines Alarmes einschaltbar ist. Diese Lasche liegt somit vorerst annähernd unsichtbar am Körper über einem der Tauchflaschen-Schultergurte an. Am unteren Ende befindet sich die Signalleuchte. Im einfachsten Fall kann der Taucher selbst, z.B. auch aus Gründen, die nicht technisch bedingt sind (also keine Überschreitung von Grenzwerten), den Verschluss am unteren Ende der Lasche lösen. Die Lasche steigt auf, sodass die Signalleuchte über dem Kopf des Tauchers positioniert ist. Es sind Auftriebskörper am Verschlussende der Lasche vorgesehen, wobei bereits die Leuchte selbst als Auftriebskörper wirkt.

Mit dem Öffnen oder Lösen des Verschlusses wird die Signalleuchte mit Spannung versorgt. Eine Glühlampe oder lichtstarke LED's blinken oder leuchten in einer Signalfarbe, wobei die Leuchte wie bei einem Einsatzfahrzeug rundum sichtbar ist. Auch ein drehendes Licht ist elektronisch durch LED's realisierbar. Wenn ein Tauchcomputer vorhanden ist und Grenzwerte eingestellt sind, dann erfolgt bei Überschreiten eines voreingestellten Grenzwertes vorerst ein erster Alarm durch Aufleuchten der Signalleuchte bei anliegender Lasche (z.B. gelbes Signallicht). Wenn der Taucher nicht reagiert und der Grenzwert noch weiter überschritten wird, dann wird der Verschluss mittels eines Schaltimpulses der Elektronik geöffnet. Die Signaleinrichtung wird durch Hochschwenken in ihrem vollen Umfang aktiviert und die Leuchte strahlt rotes Licht ab. Die Signaleinrichtung arbeitet also in diesem Fall selbsttätig. Da die Lasche im Fall ihrer Auslösung nach oben ragt und rundum unbehindert sichtbar ist, sieht eine Weiterbildung der Erfindung vor, dass in bzw. an der Lasche eine Antenne für eine Sendeeinrichtung, insbesondere für einen Ultraschallsender, zur drahtlosen Informationsvermittlung unter Wasser vorgesehen ist. Die hochragende Lasche ist somit nicht nur für die Signalleuchte, sondern auch für die Abstrahlung der Antenne optimal. Über den Ultraschallsender empfängt der Tauchpartner ein Signal, wobei seine Signalleuchte dadurch beispielsweise grün aufleuchtet. Damit wird klar, dass er selbst kein Problem hat, wohl aber sein Tauchpartner in einer Notsituation ist.

Ferner ist es zweckmäßig, wenn in bzw. an der Lasche, vorzugsweise im Bereich des freien Endes der Lasche, ein Positionssender bzw. Transponder vorgesehen ist, der eine Sende- bzw. Empfangsantenne aufweist, die gegebenenfalls zur Verbesserung der Antennenleistung längs der Lasche geführt ist. Dieser Sender tritt erst an der Wasseroberfläche beim Auftauchen in Funktion und sendet ein Ortungssignal zusammen mit den Koordinaten z.B. im Rahmen des GPS.

Eine weitere Ausführungsform ist dadurch gekennzeichnet, dass der Verschluss als elektrisch bei Alarm auslösbarer Magnetverschluss ausgebildet ist und dass bei einem Signal zum Öffnen des Verschlusses sowie beim händischen Öffnen des Verschlusses die Ultraschallsendeeinrichtung und gegebenenfalls der Positionssender bzw. Transponder einschaltbar ist. Bei einer simplen Ausführung ohne Automatik kann der Verschluss ein gewöhnlicher Klettverschluss sein. Im Falle einer selbsttätigen Funktion könnte eine Verriegelung mit einem elektromechanisch zurückziehbaren Riegel verwendet werden. Hier hat sich der Magnetverschluss als vorteilhaft herausgestellt, bei dem es möglich ist, die Haltekraft etwa durch Überlagerung eines Fremdfeldes auszuschalten und allenfalls ein Abstoßen hervorzurufen. Nach Öffnen des Verschlusses kann es zweckmäßig sein, die Lasche durch eine zusätzliche Kraft, z.B. Federkraft, aufzustoßen, also nicht bloß durch Auftriebskräfte, sondern gezielt und forciert in die aufgeschwenkte Lage zu bewegen und dort zu halten. Um die Elektronik sowie die Energieversorgung sicher zu verwahren, ist es vorteilhaft, wenn die Schaltung zur Auslösung eines Alarms einschließlich der Sensoren für die Tauchtiefe sowie eine Spannungsquelle im Inneren ein wasserdichtes Gehäuse beispielsweise in Form einer Pressluftflasche vorgesehen und eine Anzeige (Display) an einem Gurt nächst dem freien Ende der Lasche im Sichtbereich des Tauchers angeordnet sind.

Eine Besonderheit der Erfindung liegt darin, dass unterhalb der Lasche eine von der Lasche teilweise abgedeckte und parallel zum Schultergurt festgehaltene Schlauchverbindung zwischen einer Pressluftflasche und einem Reservemundstück vorgesehen und bei Hochklappen der Lasche für den Einsatz freigegeben ist. Wird also die Lasche beispielsweise automatisch freigegeben, also der Verschluss geöffnet, dann hebt die Lasche ab und steigt auf, um einerseits die Sichtbarkeit des Signallichtes zu verbessern und anderseits eine unbehinderte, bessere Signalabstrahlung zu gewährleisten. Zusätzlich gibt die Lasche nach ihrer Auslösung den Luftschlauch der Schlauchverbindung frei, sodass der Taucher bei Ausfall der primären Atemluftversorgung auf das Reservemundstück am freien Ende des Schlauches zurückgreifen kann.

### Kurze Beschreibung der Zeichnungen

Ein Ausführungsbeispiel des Erfindungsgegenstandes ist in den Zeichnungen dargestellt.
Fig. 1 zeigt einen Taucher mit Tauchausrüstung in Seitenansicht einschließlich der erfindungsgemäßen Signaleinrichtung vor deren Aktivierung,
Fig. 2 den Taucher nach Fig. 1 von vorne,
Fig. 3 den Taucher nach Fig. 1 mit der Signaleinrichtung nach deren Auslösung und
Fig. 4 eine Ansicht der Rückseite des Tauchers gemäß Fig. 3.

### Weg(e) zur Ausführung der Erfindung

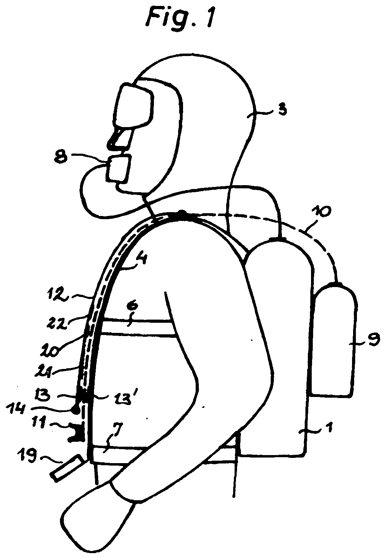

Gemäß Fig. 1 bis 4 werden zwei Pressluftflaschen 1, 2 von einem Taucher 3 zur primären Atemluftversorgung mit Hilfe von Schultergurten 4, 5, einem Brustgurt 6 und einem Beckengurt 7 getragen. Eine volle Linie deutet die Schlauchverbindung zu einem Mundstück 8 an. Sämtliche Druckreduziereinrichtungen bzw. Regelungen für die Atemluft wurden nicht dargestellt. Wie die Fig. zeigen, ist noch eine weitere Pressluftflasche 9 mit einer Luftreserve für einen Aufstieg, sowie an einer Schlauchverbindung 10 ein Reservemundstück 11 vorgesehen.

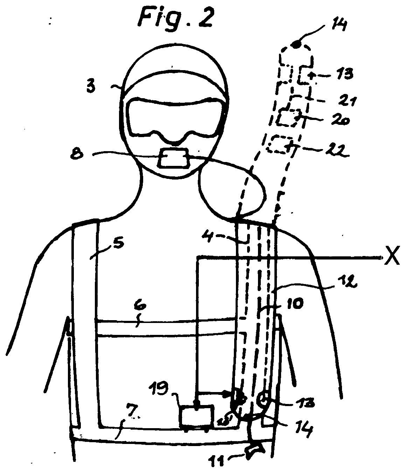

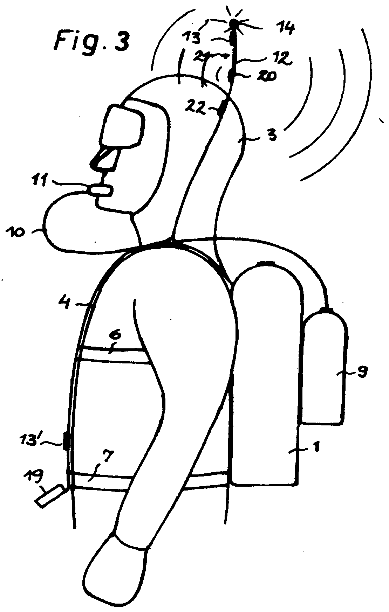

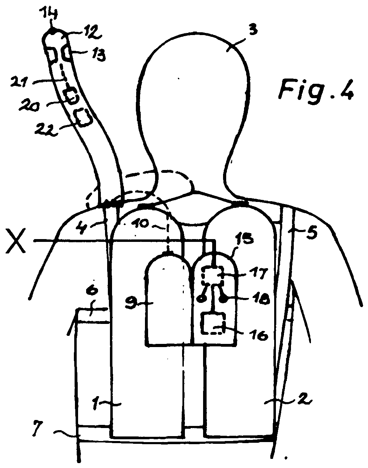

Entlang des Schultergurtes 4 ist eine Lasche 12 geführt, die oben im Schulterbereich mit dem Schultergurt 4 verbunden ist und am unteren freien Ende über einen Verschluss 13, 13' verfügt, sodass die Lasche 12 im Normalfall parallel zum Schultergurt 4 liegt und in der Nähe des Beckengurtes 7 endet. Diese Lasche 12 trägt an ihrem Verschlussende eine Signalleuchte 14, die z.B. über einen Reedkontakt nach Öffnen des Verschlusses eine grell leuchtende LED einschaltet. Diese LED kann durch Verändern der Farbe unterschiedliche Botschaften vermitteln (gelb: Alarm 1 - rot: Alarm 2 - grün: Signal beim Partner) Das Öffnen des Verschlusses 13, 13' kann von Hand aus oder selbsttätig erfolgen. Dazu ist der Verschluss 13, 13' hier beispielsweise als Magnetverschluss ausgebildet. Im Ausführungsbeispiel befindet sich in einem wasserdichten Gehäuse 15 in Form einer Pressluftflasche ein Akku 16 sowie eine elektronische Schaltung 17 zur Erfassung von Daten verschiedener Sensoren 18 wie etwa Druck für die Tauchtiefe oder Flaschenfüllstand, um den Luftvorrat zu erfassen und die Nutzungsdauer zu errechnen. Die Schaltung verfügt auch über eine Uhr und kann über ein Display 19 eingestellt werden. Diese Einstellbarkeit betrifft auch Grenzwerte der in Aussicht genommenen Tauchtiefe, Verweilzeit und das Atemluftmanagement. Alle für einen Tauchgang interessanten und wichtigen Parameter werden von dem Display 19, das mit der Schaltung 17 in Verbindung steht (Verbindung schematisch dargestellt in Fig. 2 und Fig. 4 wobei die mit X gekennzeichnete Stelle den Verbindungspunkt des Verbindungsverlaufs zwischen der Fig. 2 und Fig. 4 darstellt), angezeigt. Bei Überschreiten eines Parameters (z.B. der Tauchtiefe) macht sich das Display 19 bemerkbar und weist etwa durch Blinken der Anzeige auf diesen Umstand hin. Auch die Signalleuchte 14 am Ende der Lasche 12 leuchtet zur Warnung gelb, rot, grün auf. Wird über den Sensor 18 für die Tauchtiefe ein weiteres oder anhaltendes Überschreiten des vom Taucher selbst voreingestellten Grenzwertes gemeldet, dann gelangt ein Signal von der Schaltung 17 an den Verschluss 13, 13'. Dieser wird durch ein überlagertes Magnetfeld oder in anderer Weise geöffnet, sodass die Lasche 12 aufschwimmt, wie dies Fig. 3 und 4 zeigen. Durch das Entfernen von der Auflagefläche auf dem Schultergurt 4 oder von einer Auflage auf dem Schultergurt 4 leuchtet auch die Signallampe 14.

Ein Ultraschallsender 20 (Sender beispielsweise im Bereich 15 kHz) in der Lasche 12 oder im Gehäuse 15 wird mit dem Signal zum Öffnen des Verschlusses 13, 13' oder zum Einschalten der Leuchte 14 aktiviert und strahlt über eine nun bestens positionierte Antenne 21 ein Funksignal z.B. für den Tauchlehrer oder Begleiter aus, damit diese allenfalls helfen können. Wie erwähnt leuchtet beim Tauchlehrer oder Begleiter die LED dann grün.

Die Lasche 12 deckt im Normalfall den Schlauch 10 der Pressluftflasche 9 ab und hält ihn eng an dem Schultergurt 4 oder einer Schultergurtauflage fest. Sobald die Notsituation eintritt und die Lasche 12 freigegeben, also der Verschluss 13, 13' geöffnet wird, steht auch diese Notluftversorgung zur Verfügung. Das Ersatzmundstück 11 kann ergriffen und verwendet werden - wie dies Fig. 3 zeigt. Damit ist ein kontrollierter Aufstieg möglich.

Nach dem Auftauchen schwimmt die freigegebene Lasche 12 an der Wasseroberfläche. Damit ist eine terrestrische Funkverbindung im Rahmen weltweiter Ortungssysteme möglich. Ein GPS-Positionssender 22 bzw. Transponder tritt in Funktion und erleichtert die Suche nach dem Taucher.

Die Erfindung steht in unterschiedlichen Ausbaustufen zur Verfügung und ist im Zusammenhang mit dem Tauchunterricht äußerst hilfreich. Sie lässt den Tauchlehrer sofort erkennen, welcher seiner Schüler Probleme hat und sie gibt dem Taucher Sicherheit, weil die Tauchpartner sofort über eine Notsituation zur Hilfeleistung informiert werden bzw. eine Rettungskette in Gang gesetzt wird. Im einfachsten Fall könnte eine Handauslösung durch Öffnen des Verschlusses erfolgen. Wenn die Signalleuchte aus dem Bereich eines Magneten am Schultergurt vis a vis der Signalleuchte kommt, schließt ein Reedkontakt und schaltet das Rundumlicht (Leuchte 14) ein. Der Vorgang erfolgt in der nächsten Stufe bei Einsatz eines Tauchcomputers automatisch. Ebenso die Erweiterung durch die Ultraschallalarmmeldung unter Wasser und schließlich ist das Freilegen einer sekundären Atemluftversorgung im Zusammenhang mit dem Lösen der Lasche 12 eine weitere Option bei einer bausteinartigen Aufwertung einer Grundversion der Signaleinrichtung. Die Elektronik der Signaleinrichtung kann auch aktiv mit einer bestehenden Tarierweste für die Steuerung der Tauchtiefe zusammenwirken und so zur Bergung eines Verunglückten eingesetzt werden.

## Patentansprüche

1. Signaleinrichtung für Taucher, mit einer Pressluftmengen- bzw. Verbrauchsanzeige für Atemluft, einer Tauchtiefenanzeige, vorzugsweise einer Tauchzeitanzeige sowie insbesondere einer Schaltung zur Auslösung eines Alarmes z.B. eines Lichtsignals bei Erreichen bzw. Überschreiten mindestens eines voreingestellten Grenzwertes, **dadurch gekennzeichnet, dass** sich eine Lasche (12) längs eines Pressluftflaschen-Schultergurtes (4), diesen zumindest teilweise überdeckend, vom Schulterbereich ausgehend in Richtung zum Gürtelbereich erstreckt, dass die Lasche (12) im Schulterbereich schwenkbar angelenkt und am freien Ende mit einem lösbaren Verschluss (13, 13') ausgestattet ist, der die Lasche (12) parallel zum Schultergurt (4) unmittelbar an diesem oder an einem Lappen an dem Schultergurt (4) festhält und der von Hand aus oder selbsttätig bei Anliegen eines Alarmes bei bzw. nach Überschreiten eines der voreingestellten Grenzwerte, zur Freigabe, Hochklappen bzw. Aufschwimmen der Lasche (12) lösbar ist, wobei die Lasche (12) eine Signalleuchte (14) am freien Ende trägt, die bei geöffnetem Verschluss(13, 13') bzw. bei Anliegen eines Alarmes einschaltbar ist.

2. Signaleinrichtung nach Anspruch 1, **dadurch gekennzeichnet, dass** in bzw. an der Lasche (12) eine Antenne (21) für eine Sendeeinrichtung (20), insbesondere für einen Ultraschallsender, zur drahtlosen Informationsvermittlung unter Wasser vorgesehen ist.

3. Signaleinrichtung nach den Ansprüchen 1 oder 2, **dadurch gekennzeichnet, dass** in bzw. an der Lasche (12), vorzugsweise im Bereich des freien Endes der Lasche (12), ein Positionssender (22) bzw. Transponder vorgesehen ist, der eine Sende- bzw. Empfangsantenne aufweist, die gegebenenfalls zur Verbesserung der Antennenleistung längs der Lasche (12) geführt ist.

4. Signaleinrichtung nach einem der Ansprüche 1 bis 3, **dadurch gekennzeichnet, dass** unterhalb der Lasche (12) eine von der Lasche teilweise abgedeckte und parallel zum Schultergurt (4) festgehaltene Schlauchverbindung (10) zwischen einer Pressluftflasche (9) und einem Reservemundstück (11) vorgesehen und bei Hochklappen der Lasche (12) für den Einsatz freigegeben ist.

5. Signaleinrichtung nach den Ansprüchen 1 bis 3, **dadurch gekennzeichnet, dass** der Verschluss (13, 13') als elektrisch bei Alarm auslösbarer Magnetverschluss ausgebildet ist und dass bei einem Signal zum Öffnen des Verschlusses sowie beim händischen Öffnen des Verschlusses die Sendeeinrichtung (20) und gegebenenfalls der Positionssender (22) bzw. Transponder einschaltbar sind.

6. Signaleinrichtung nach einem der Ansprüche 1 bis 5, **dadurch gekennzeichnet, dass** die Schaltung (17) zur Auslösung eines Alarms wie auch Sensoren (18) für die Tauchtiefe und eine Spannungsquelle (16) im Inneren eines wasserdichten Gehäuses (15), beispielsweise in der Form einer Pressluftflasche, vorgesehen und eine Anzeige an einem Gurt nächst dem freien Ende der Lasche (12) im Sichtbereich des Tauchers (3) angeordnet sind.

## Claims

1. A signaling device for a diver, comprising a compressed-air supply level or consumption display for breathable air, a diving depth display, preferably a dive-duration display, as well as, in particular, a circuit for triggering an alarm, for example a light signal when at least one pre-set threshold value has been reached or exceeded, **characterized in that** an elongated flap (12) extends starting from the shoulder region toward the belt region along a compressed-air-tank shoulder strap (4), at least partially covering this strap, that the elongated flap (12) is flexibly connected at the shoulder region and is provided at the free end with a releasable fastener (13, 13') that secures the elongated flap (12) parallel to the shoulder strap (4) directly thereon or on a tab of the shoulder strap (4) and that can be released by hand or automatically in response to an alarm whenever one of the preset threshold values is met or exceeded, so as to release, swing upward, or float the elongated flap (12), the elongated flap (12) supporting at the free end a signal lamp (14) that can be switched on when the fastener (13, 13') is opened or in response to an alarm.

2. The signaling device according to claim 1, **characterized in that** an antenna (21) for a transmitter (20), in particular, an ultrasound transmitter, is provided on the elongated flap (12) for wireless underwater communication.

3. The signaling device according to claims 1 or 2, **characterized in that** a position transmitter (22) or transponder is provided in or on the elongated flap (12), preferably, in the region of the free end of the elongated flap (12), which transmitter or transponder is optionally routed along the elongated flap (12) to improve the performance of the antenna.

4. The signaling device according to one of claims 1 through 3, **characterized in that** a connector hose (10) is provided underneath the elongated flap (12) between a compressed-air tank (9) and an auxiliary mouthpiece (11), which connector hose is partially covered by the elongated flap and secured parallel to the shoulder strap (4), and is released for use when the elongated flap (12) is swung upward.

5. The signaling device according to one of claims 1 through 3, **characterized in that** the fastener (13, 13') is a magnetic latch that can be electrically activated in response to an alarm, and that the transmitter (20), and optionally the position transmitter (22) or transponder, can be switched on in response to a signal to open the fastener or on manual opening of the fastener.

6. The signaling device according to one of claims 1 through 5, **characterized in that** the circuit (17) for triggering an alarm, as well as sensors (18) for the diving depth and an electrical power source (16) are provided inside a watertight housing (15), for example, in the form of a compressed-air tank, and a display is provided within view of the diver (3) on a strap close to the free end of the elongated flap (12).

## Revendications

1. Dispositif de signalisation pour plongeurs, comportant un affichage de la quantité ou de la consommation d'air comprimé destiné à la respiration, un affichage de la profondeur de plongée, préférentiellement un affichage de la durée de plongée ainsi que, notamment, un circuit permettant de déclencher une alerte, par exemple un signal lumineux, lorsqu'au moins une valeur limite prédéterminée est atteinte ou dépassée, **caractérisé en ce qu'**une languette (12) s'étend, le long d'une bretelle (4) pour bouteilles d'air comprimé en la recouvrant au moins partiellement, depuis la zone des épaules en direction de la zone de la ceinture, que la languette (12) est montée pivotante au niveau de l'épaule tout en étant pourvue, à son extrémité libre, d'une fermeture détachable (13, 13') laquelle maintient la languette (12) en position parallèle à la bretelle (4) de manière à ce qu'elle reste en contact directe avec cette dernière ou avec une patte étant rapportée sur la bretelle (4) et à ce qu'elle puisse s'en détacher automatique, ou suite à une intervention manuelle, en cas d'alerte et/ou de dépassement de l'une des valeurs limites prédéterminées, faisant en sorte que la languette (12) se libère, se rabatte vers le haut et/ou s'élève par flottaison, l'extrémité libre de la languette (12) étant pourvue d'un organe de signalisation lumineuse (14) lequel peut être allumé lorsque la fermeture (13, 13') est ouverte et/ou en cas d'alerte.

2. Dispositif de signalisation selon la revendication 1, **caractérisé en ce qu**'une antenne (21) est disposée dans ou sur la languette (12) pour ainsi servir à un dispositif d'émission (20), notamment à un émetteur d'ultrasons, permettant une transmission d'informations sans fil dans un milieu aquatique.

3. Dispositif de signalisation selon les revendications 1 ou 2, **caractérisé en ce qu**'une balise de positionnement (22) ou un transpondeur comportant une antenne d'émission et/ou de réception est disposé(e) dans ou sur la languette (12), préférentiellement au niveau de l'extrémité libre de la languette (12), ladite antenne s'étendant éventuellement le long de la languette (12) pour améliorer sa performance.

4. Dispositif de signalisation selon l'une des revendications 1 à 3, **caractérisé en ce qu**'un tuyau (10) reliant une bouteille d'air comprimé (9) et un embout de détendeur de secours (11) est disposé sous la languette (12) de manière à être maintenu dans une position parallèle à la bretelle (4) tout en étant partiellement recouvert par la languette, un rabattement vers le haut de la languette (12) permettant alors de le mettre en oeuvre.

5. Dispositif de signalisation selon les revendications 1 à 3, **caractérisé en ce que** la fermeture (13, 13') est réalisée sous forme d'une fermeture magnétique pouvant être déclenchée électriquement en cas d'alerte, et que le dispositif d'émission (20) et éventuellement la balise de positionnement (22) ou le transpondeur peuvent être mis en marche en cas de signal provoquant l'ouverture de la fermeture et en cas d'ouverture manuelle de la fermeture.

6. Dispositif de signalisation selon l'une des revendications 1 à 5, **caractérisé en ce que** le circuit (17) permettant de déclencher une alerte, ainsi que des capteurs (18) de profondeur de plongée et une source de tension (16), sont placés au sein d'un boîtier (15) étanche à l'eau, réalisé par exemple sous forme d'une bouteille d'air comprimé, et un affichage est disposé sur une sangle à proximité de l'extrémité libre de la languette (12), dans le champ de vision du plongeur (3).
